# EUROPÄISCHE PATENTANMELDUNG

(11) **EP 3 267 277 A1**
(43) Veröffentlichungstag der Anmeldung: **10.01.2018**
(21) Anmeldenummer: 17180118.6
(22) Anmeldetag: 06.07.2017
(51) Int. Cl.: G05D 16/00, G05D 16/06, G05D 7/00, G05D 7/01

(54) **MENGENREGLER FÜR EIN VENTIL**

(30) Priorität: 07.07.2016 DE 102016112514
(71) Anmelder: A. u. K. Müller GmbH & Co. KG, 40595 Düsseldorf (DE)
(72) Erfinder:
(74) Vertreter: Feder Walter Ebert

(57) **Zusammenfassung**

Die Erfindung betrifft einen Mengenregler für ein Ventil (20), insbesondere Servoventil, mit einem von einem Medium durchströmbaren Durchfluss (2) und einer im Anströmbereich des Durchflusses (2) angeordneten Drossel (3), über welche die in den Durchfluss (2) strömende Fluidmenge druckabhängig regelbar ist, wobei der Durchflussquerschnitt (Q) des Durchflusses (2) über eine Einstellmechanik (4) einstellbar ausgebildet ist. Einen weiteren Gegenstand der Erfindung bildet ein Ventil mit einem Ventileinlass (21) und einem Ventilauslass, wobei innerhalb des Ventileinlasses (21) ein Mengenregler (1) angeordnet ist.

## Beschreibung

Die vorliegende Erfindung betrifft einen Mengenregler insbesondere für ein Ventil, wie beispielsweise ein Servoventil, mit einem von einem Medium durchströmbaren Durchfluss und einer im Anströmbereich des Durchflusses angeordneten Drossel, über welche die in den Durchfluss strömende Fluidmenge druckabhängig regelbar ist. Einen weiteren Gegenstand bildet ein Ventil mit einem solchen Mengenregler.

Derartige Mengenregler werden in vielen Bereichen der Ventiltechnik eingesetzt, um die durch das Ventil strömende Fluidmenge auch bei Änderungen oder Schwankungen des anliegenden Leitungsdrucks, beispielsweise eines Wasserversorgungssystems, auf einem möglichst konstanten Niveau zu halten.

Die Mengenregler verfügen hierzu über einen von dem Fluid durchströmbaren Durchfluss, bei welchem es sich um eine oder mehrere durchgängige Bohrungen, Kanäle oder andere von dem Fluid durchströmbare Öffnungen handeln kann. Da die Fluidmenge des durch den Durchfluss strömenden Fluids von dem Druck des anliegenden Mediums abhängig ist, wird im Anströmbereich des Durchflusses eine Drossel angeordnet, über welche die in den Durchfluss strömende Fluidmenge geregelt wird. Bei steigendem Druck wird der Anströmquerschnitt des Durchflusses über die Drossel reduziert, so dass trotz des steigenden Drucks weitgehend konstante Fluidmengen durch den Durchfluss strömen. Im umgekehrten Fall wird über die Drossel bei sinkendem Druck der Anströmquerschnitt des Durchflusses erhöht, wodurch sich ebenfalls konstante Fluidmengen ergeben.

Diese Art von Mengenreglern hat sich in der Vergangenheit durchaus bewährt. Nachteilig ist jedoch, dass für verschiedene Anwendungen mit unterschiedlichen Volumenströmen des Ventils immer auch verschiede Mengenregler verwendet werden müssen, bei denen der Durchflussquerschnitt des Durchflusses an die gewünschten Volumenströme des Ventils angepasst ist. In der Praxis ergibt sich eine Vielzahl unterschiedlicher Mengenregler, deren Bevorratung sich als aufwendig erwiesen hat.

Aufgabe der vorliegenden Erfindung ist es daher, einen Mengenregler für Ventile zu schaffen, welcher für Ventile mit unterschiedlichen Volumenströmen gleichermaßen verwendet werden kann.

**Gelöst** wird diese Aufgabe bei einem Mengenregler der eingangs genannten Art dadurch, dass der Durchflussquerschnitt des Durchflusses über eine Einstellmechanik einstellbar ausgebildet ist.

Durch Einstellen des Durchflussquerschnitts des Durchflusses lässt sich die über den Mengenregler strömende Fluidmenge entsprechend dem durch das Ventil vorgegebenen Volumenstrom einstellen. Bei solchen Ventilanwendungen, die eine große Fluidmenge benötigen, kann der Durchflussquerschnitt des Durchflusses über die Einstellmechanik entsprechend groß eingestellt werden. Im Falle von Anwendungen, bei denen nur geringere Fluidmengen benötigt werden, kann der Durchflussquerschnitt des Durchflusses entsprechend reduziert werden, so dass sich der Mengenregler nicht nur für eine bestimmte Anwendung, sondern für eine Vielzahl unterschiedlicher Anwendungen verwenden lässt. Es ergeben sich wenige Varianten unterschiedlicher Mengenregler.

Eine vorteilhafte Ausgestaltung des Mengenreglers sieht vor, dass die Einstellmechanik ein Lochscheibenpaar aufweist. Das Lochscheibenpaar kann mit zueinander korrespondierend ausgebildeten und angeordneten Löchern versehen sein, die als Durchfluss für das strömende Fluid dienen.

In diesem Zusammenhang ist es ferner von Vorteil, wenn das Lochscheibenpaar eine feststehende Grundscheibe und eine gegenüber der Grundscheibe drehbar angeordnete Stellscheibe aufweist. Durch Verdrehen der Stellscheibe gegenüber der feststehend ausgebildeten Grundscheibe kann der Deckungsgrad der sich gegenüberliegenden Öffnungen verändert und dadurch der Durchflussquerschnitt entsprechend der jeweiligen Anwendung auf einfache Weise eingestellt werden.

In diesem Zusammenhang ist es von Vorteil, wenn die Stellscheibe einen drehbeweglich mit der Grundscheibe verbundenen Lagerzapfen aufweist. Der Lagerzapfen kann in eine korrespondierend gestaltete Lageröffnung der Grundscheibe eingesteckt sein, so dass auf diese Weise eine Drehverbindung beider Bauteile erreicht werden kann. Der Lagerzapfen kann an der Stellscheibe einstückig angeformt oder als separates Bauteil mit dieser verbunden sein. Im Falle einer im Spritzgussverfahren hergestellten Stellscheibe aus Kunststoffmaterial bietet eine einstückige Anformung des Lagerzapfens fertigungstechnische Vorteile.

In weiterer Ausgestaltung wird vorgeschlagen, dass die Stellscheibe einen Stellzapfen zum manuellen Bewegen der Stellscheibe gegenüber der Grundscheibe aufweist. Der Stellzapfen kann auf der dem Lagerzapfen gegenüberliegenden Seite der Stellscheibe angeordnet sein. Bei dem Stellzapfen kann es sich um einen von Hand oder mittels eines Werkzeugs drehbaren Zapfen handeln. Vorteilhaft kann der Stellzapfen derart ausgebildet sein, dass sich dieser mittels einer Zange, beispielsweise einer Spitzzange, betätigen lässt.

Eine weitere Ausgestaltung sieht vor, dass die Stellscheibe axial bewegbar gegenüber der Grundscheibe angeordnet ist. Durch axiales Bewegen der Stellscheibe gegenüber der Grundscheibe entsteht ein Spalt zwischen den beiden Scheiben. Die axiale Beweglichkeit kann zum Lösen der beiden Scheiben voneinander dienen. Im Falle einer an der Grundscheibe anliegenden Stellscheibe können Drehbewegungen beider Bauteile gegeneinander blockiert sein. Durch axiales Bewegen kann diese Blockade gelöst werden.

Vorteilhafterweise sind die Axialbewegungen der Stellscheibe über Anschläge begrenzt. Durch die Verwendung von die Axialbewegungen der Stellscheibe begrenzenden Anschlägen wird die axiale Beweglichkeit auf den Raum zwischen den Anschlägen begrenzt. Die Gefahr eines ungewollten Lösens beider Scheiben wird vermieden.

Vorteilhafterweise weist der Lagerzapfen mehrere Federzungen auf. Die Federzungen können nach radial außen vorgespannte Federzungen sein, welche beim Eintauchen in die Lageröffnung entgegen einer Kraft nach innen ausweichen und nach Hindurchtreten durch die Lageröffnung nach außen schnappen.

Eine weitere vorteilhafte Ausgestaltung sieht vor, dass die Grundscheibe umfangsseitig einen Einpressbereich zur Einpressung des Mengenreglers in den Einlass des Ventils aufweist. Über den Einpressbereich kann auf einfache Weise eine Pressverbindung zwischen dem Mengenregler und dem Ventil hergestellt werden. Der Mengenregler kann in axialer Richtung in einen Einlass des Ventils bis an einen dort vorgesehenen Anschlag in definierter Lage eingepresst werden.

Vorteilhafterweise weist der Einpressbereich mehrere Rippen zur Verkrallung des Mengenreglers innerhalb des Einlasses des Ventils auf. Über die Rippen wird eine sehr positionsstabile Anordnung erreicht. Auch beim Beaufschlagen des Mengenreglers und insbesondere dessen Stellzapfens mit einer Kraft wird ein ungewolltes Lösen und insbesondere Verdrehen des Mengenreglers innerhalb des Einlasses des Ventils vermieden.

Eine besonders vorteilhafte Ausgestaltung sieht vor, dass die Grundscheibe und die Stellscheibe in verschiedenen Drehstellungen gegeneinander festlegbar sind. Entsprechend der jeweiligen Drehstellung können sich unterschiedliche Deckungsgrade der Öffnungen und damit unterschiedliche Durchflussquerschnitte des Durchflusses entsprechend dem gewünschten Volumenstrom des Ventils ergeben. Die Festlegung in verschiedenen Drehstellungen kann stufenlos erfolgen. Besonders vorteilhaft ist jedoch eine gestufte Festlegung entsprechend gewünschter Durchflussquerschnitte.

In diesem Zusammenhang hat es sich als besonders vorteilhaft erwiesen, wenn die Grundscheibe und die Stellscheibe über mehrere Rastelemente gegeneinander festlegbar sind. Durch Verrasten der Rastelemente können die Grundscheibe und die Stellscheibe in deren gewünschter Drehstellung auf einfache Weise gegeneinander festgelegt werden. Durch anschließendes Lösen der Rastelemente besteht auch die Möglichkeit, die Grundscheibe und die Stellscheibe je nach dem gewünschten Volumenstrom des Ventils in einer anderen Drehstellung festzulegen.

Eine weitere vorteilhafte Ausgestaltung sieht vor, dass mehrere, insbesondere sechs, Rastelemente an der Grundscheibe und ein Rastelement an der Stellscheibe angeordnet sind. Durch Drehen der Stellscheibe gegenüber der Grundscheibe kann das an der Stellscheibe angeordnete Rastelement in eine Raststellung gegenüber einem an der Grundscheibe angeordneten Rastelement gebracht und anschließend mit diesem verrastet werden.

Von konstruktivem Vorteil ist eine Ausgestaltung, bei welcher die an der Grundscheibe angeordneten Rastelemente als Rastausnehmungen und die an der Stellscheibe angeordneten Rastelemente als Rastnasen ausgebildet sind. Zur Herstellung der Rastverbindung können die Rastnasen formschlüssig in die korrespondierend gestalteten Rastausnehmungen eingreifen.

Eine montagefreundliche und wenig fehleranfällige Ausgestaltung sieht ferner vor, dass die Grundscheibe eine den Durchflussquerschnitt angebende Skala aufweist. Anhand der Skala kann der Monteur unabhängig von der Drehstellung des Mengenreglers innerhalb des Ventileinlasses zuverlässig und ohne die Gefahr etwaiger Fehleinstellungen anhand der Skala den jeweils gewünschten Durchflussquerschnitt auswählen und über die Einstellmechanik eine entsprechende Einstellung vornehmen.

Im Hinblick auf die Drossel sieht eine besonders in konstruktiver Hinsicht vorteilhafte Ausgestaltung vor, dass die Drossel als verformbare Drosselscheibe ausgebildet ist. Die Drossel kann aus einem elastischen Material, beispielsweise Gummi oder ähnlichen Materialien, gefertigt sein. Durch den Druck des anliegenden Mediums kann sich die Drosselscheibe verformen und auf diese Weise die in den Durchfluss einströmende Fluidmenge druckabhängig verändern.

Vorteilhafterweise ist die Drossel an der Stellscheibe angeordnet. Die Drossel kann mit der aus einem anderen Material bestehenden Stellscheibe lösbar verbunden sein. Beispielsweise kann die Drossel durch Aufstecken auf den Stellzapfen mit der Stellscheibe verbunden werden.

Ferner kann vorgesehen sein, dass die eine Seite der Drossel konisch ausgebildet und/oder die andere Seite der Drossel mit Rippen versehen ist. Die konische Seite der Drossel kann anströmseitig an der Drossel vorgesehen sein. Die der Stellscheibe zugeordnete Seite kann mit Rippen versehen sein, über welche die Drossel auf der Stellscheibe aufliegt. Beispielsweise können die Rippen sich sternenförmig nach radial außen erstreckend angeordnet sein.

Eine in montagetechnischer Hinsicht besonders vorteilhafte, da wenig Montageschritte erfordernde Ausgestaltung des Mengenreglers sieht vor, dass dieser als Einpresseinheit zur Pressmontage innerhalb des Einlasses des Ventils ausgebildet ist. Der Mengenregler kann in baulicher Einheit in den Einlass eingepresst werden. Anschließend kann über die Einstellmechanik der Durchflussquerschnitt des Durchflusses des Mengenreglers eingestellt werden. Weitere Montageschritte sind nicht erforderlich.

Darüber hinaus wird zur Lösung der vorstehend genannten Aufgabe ein Ventil mit einem Ventileinlass und einem Ventilauslass vorgeschlagen, bei welchem innerhalb des Ventileinlasses ein Mengenregler nach einem der vorhergehenden Ansprüche angeordnet ist. Auch bei einem solchen Ventil ergeben sich die zuvor im Zusammenhang mit dem Mengenregler erläuterten Vorteile.

Weitere Einzelheiten und Vorteile eines erfindungsgemäßen Mengenreglers sowie eines mit einem solchen Mengenregler ausgestatteten Ventils werden nachfolgend unter Zuhilfenahme der beigefügten Darstellungen eines Ausführungsbeispiels erläutert werden. Darin zeigen:
- Fig. 1: eine perspektivische Ansicht des Mengenreglers;
- Fig. 2: eine Schnittansicht eines Ventileinlasses mit einem Mengenregler gemäß Fig. 1;
- Fig. 3a bis 3d: verschiedene Ansichten eines Mengenreglers zur Veranschaulichung der Vorgänge beim Betätigen der Einstellmechanik;
- Fig. 4: eine Schemaansicht zur Veranschaulichung der Einstellmöglichkeiten;
- Fig. 5: eine vergrößerte Detailansicht der in Fig. 4 mit A bezeichneten Einzelheit;
- Fig. 6: eine vergrößerte Detailansicht der in Fig. 4 mit B bezeichneten Einzelheit; und
- Fig. 7: eine vergrößerte Schnittansicht des Einströmbereichs des Durchflusses.

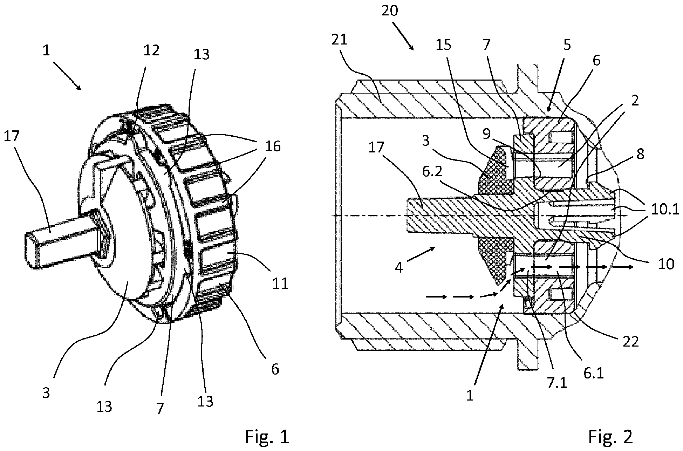

Fig. 1 zeigt in perspektivischer Ansicht einen erfindungsgemäßen Mengenregler 1, der gemäß der Darstellung in Fig. 2 innerhalb des Ventileinlasses 21 eines Ventils 20 angeordnet werden kann. Alternativ kann der Mengenregler 1 auch in anderen mediendurchströmten Bauteilen, insbesondere in Rohrleitungen angeordnet werden.

Wie die Darstellungen in den Fig. 1 und 2 erkennen lassen, weist der Mengenregler 1 ein Lochscheibenpaar 5 auf, welches aus einer feststehend innerhalb des Ventileinlasses 21 angeordneten Grundscheibe 6 sowie einer Stellscheibe 7 besteht, welche gegenüber der Grundscheibe 6 drehbar gelagert ist.

Am Umfang der Grundscheibe 6 ist ein Einpressbereich 11 vorgesehen, der zur Montage des Mengenreglers 1 innerhalb des Ventileinlasses 21 dient. In dem Einpressbereich 11 bzw. am Umfang der Grundscheibe 6 sind ferner mehrere Rippen 16 vorgesehen, die sich in axialer Richtung erstrecken und zum Verkrallen des in den Ventileinlass 21 eingepressten Mengenreglers 1 dienen. Zur Montage des Mengenreglers 1 innerhalb des Ventileinlasses 21 wird dieser in axialer Richtung in den ein gewisses Untermaß gegenüber dem Mengenregler 1 aufweisenden Ventileinlass 21 bis in eine Position eingepresst, in welcher dieser an einem Anschlag 22 anliegt.

Die Grundscheibe 6 wie auch die Stellscheibe 7 weisen jeweils mehrere Ausnehmungen 6.1, 7.1 auf, welche die Grundscheibe 6 bzw. die Stellscheibe 7 nach Art von durchgängigen Bohrungen durchsetzen. Die Ausnehmungen 6.1, 7.1 sind über den Umfang des Lochscheibenpaares 5 verteilt angeordnet. Die Anordnung ist derart, dass diese durch Drehen der Stellscheibe 7 gegenüber der Grundscheibe 6 in eine deckungsgleiche Anordnung gebracht werden können. In dieser Stellung ergibt sich der maximale Querschnitt Q des Durchflusses 2. Durch gegenseitiges Verdrehen der Stellscheibe 7 gegenüber der Grundscheibe 6 kann der Durchflussquerschnitt Q ausgehend von dem in Fig. 2 dargestellten Maximalquerschnitt reduziert werden, worauf nahfolgend noch näher einzugehen sein wird.

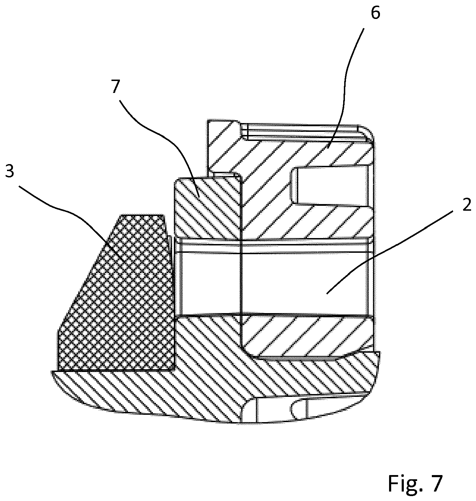

Im Anströmbereich des Lochscheibenpaares 5 befindet sich eine Drossel 3, die dazu dient, unabhängig von etwaigen Druckschwankungen einen konstanten Volumenstrom des strömenden Fluids zu erzeugen, vgl. auch Fig. 7. Die Drossel 3 ist nach Art einer aus einem elastischen Material bestehenden Drosselscheibe ausgebildet und mit der Stellscheibe lösbar verbunden. Beim Ausführungsbeispiel ist die Drossel 3 auf einen nachfolgend noch näher erläuterten Stellzapfen 17 der Stellscheibe 7 aufgesteckt. Die anströmseitige Seite der Drossel 3 weist eine konische Kontur auf. Abströmseitig weist die Drossel 3 in deren Anlagebereich an der Stellscheibe 3 mehrere Rippen 15 auf. Durch die Rippen 15 wird eine flächige Anlage an der Stellscheibe 7 vermieden, durch welche der Durchlass 2 vollständig verschlossen werden könnte.

Wie in Fig. 2 schematisch eingezeichnet ist, strömt das Fluid unterhalb der als eine Art Drosselscheibe ausgebildeten Drossel 2 hindurch und tritt dort in den Durchfluss 2 ein. Sobald der Druck innerhalb des Ventileinlasses 21 steigt, beginnt sich die aus einem kompressiblen Material bestehende Drossel 3 zu verformen, wodurch sich unterhalb der Drossel 3 ein schmalerer Durchtritt ergibt. Hierdurch ergeben sich auch bei steigenden Drücken innerhalb des Ventileinlasses 21 nahezu konstante Volumenströme innerhalb des Durchflusses 2.

Auf der einen Seite der Stellscheibe 7 ist ein Lagerzapfen 10 vorgesehen, der beim Ausführungsbeispiel von insgesamt drei federnden Zungen 10.1 gebildet wird. Die Zungen 10.1 sind nach radial außen vorgespannt und federn bei Einführen des Lagerzapfens 10 in die Lageröffnung 6.2 der Grundplatte 6 nach innen ein. Anschließend federn die Zungen 10.1 nach Durchführung durch die Lageröffnung 6.2 selbsttätig nach außen und die an den Zungen 10.1 vorgesehenen Anschläge 8 sichern die Stellscheibe 7 gegen ungewolltes Lösen von der Grundscheibe 6.

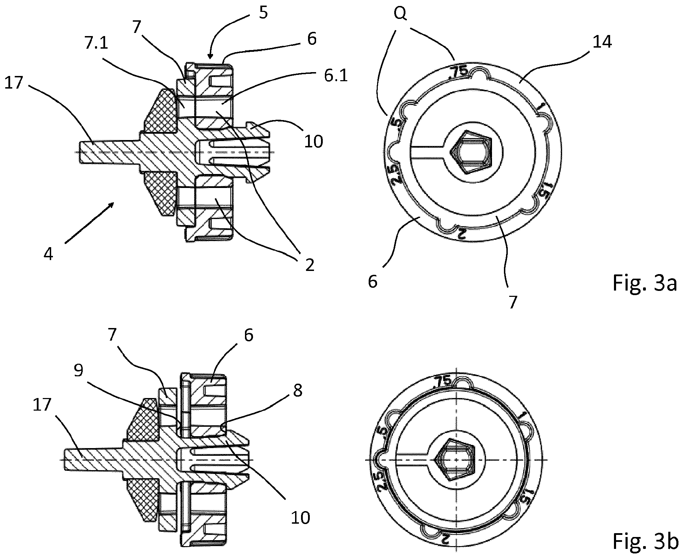

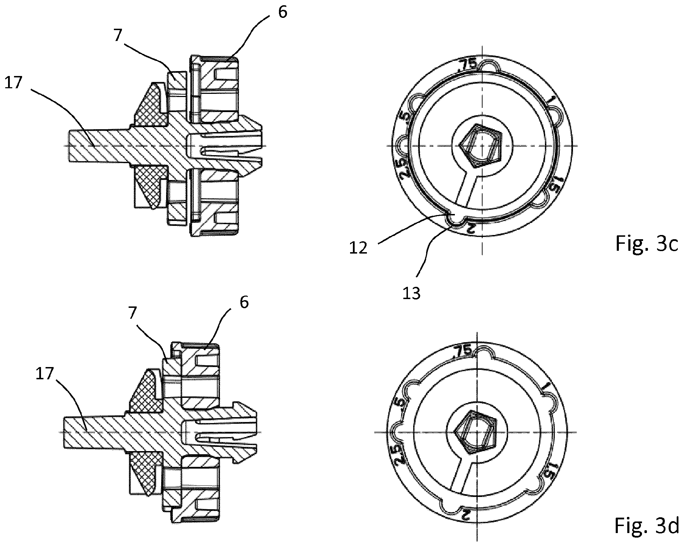

Auf der anderen Seite der Stellscheibe 7 ist als wesentliches Element der Einstellmechanik 4 ein Stellzapfen 17 vorgesehen, über welchen sich die Drehbewegung der Stellscheibe 7 initiieren lässt, worauf nachfolgend anhand der Darstellungen in den Fig. 3a bis 3d näher eingegangen werden wird.

Fig. 3a entspricht jener Stellung, die auch in Fig. 2 dargestellt ist. Die Bohrungen bzw. die Ausnehmungen 6.1, 7.1 des Lochscheibenpaares 5 befinden sich in einer fluchtenden Stellung. In dieser Stellung ist der Durchflussquerschnitt Q des Durchflusses 2 maximal. Auf der im rechten Teil der Fig. 3a zu erkennenden Skala 14 der Grundscheibe 6 ist dieser Querschnitt Q mit "2,5" beziffert. Um den Querschnitt Q entsprechend dem Volumenstrom des Ventils 20 im Bedarfsfall reduzieren zu können, ist die bereits anhand der Darstellungen in den Fig. 1 und 2 erwähnte Einstellmechanik 4 vorgesehen, über welche sich die in der Skala 14 mit den Werten "2", "1,5", "1", "0,75" sowie "0,5" bezifferten Querschnitte Q des Durchflusses 2 einstellen lassen.

Zur Einstellung des Querschnitts Q wird zunächst der Stellzapfen 17 beispielsweise mittels einer Zange an dessen freiem Ende gegriffen. Anschließend wird eine in axialer Richtung des Stellzapfens 17 weisende Zugkraft auf den Stellzapfen 17 und damit die Stellscheibe 7 ausgeübt. Infolge dieser Axialkraft weichen die federnden Zungen des Lagerzapfens 10 etwas nach innen aus. Die Stellscheibe 7 hebt von der Grundscheibe 6 gemäß der Darstellung in Fig. 3b ab, wonach sich die Stellscheibe 7 durch lösen zuvor miteinander in Eingriff stehender Rastelemente 12, 13 gegenüber der Grundscheibe 6 drehen lässt. Die Axialbewegung des Stellzapfens 17 bzw. der Stellscheibe 7 wird über zwei Anschläge 8, 9 begrenzt. Der eine Anschlag 9 wird durch die der Grundscheibe 6 zugewandte Stirnfläche der Stellscheibe 7 gebildet. Der gegenüberliegende Anschlag 8 ist an dem Lagerzapfen 10 vorgesehen. Gebildet wird dieser durch eine an den freien Enden der federnden Zungen 10.1 angeordnete Anschlagfläche, welche die Grundscheibe 6 bzw. deren Öffnung hintergreift.

In Fig. 3b ist die axiale Endstellung dargestellt. In dieser ist der Stellzapfen 17 in dessen axialer Endstellung gegenüber der feststehenden Grundscheibe 6 und die Anschläge 8 liegen an der Unterseite der Grundscheibe 6 an. Sobald diese Stellung erreicht ist, werden Rastelemente 12, 13, welche einerseits an der Grundscheibe 6 und andererseits an der Stellscheibe 7 angeordnet sind, außer Eingriff gebracht. Bei dem an der Stellscheibe 6 vorgesehenen Rastelement 12 handelt es sich um eine nach radial außen vorspringende Rastnase 12, welche in entsprechende Rastausnehmungen 13 in axialer Richtung eintauchen und auf diese Weise eine formschlüssige Verbindung herstellen kann. Der axiale Verfahrweg der Stellscheibe 7 ist so bemessen, dass mit Erreichen des Anschlags 8 die Verrastung der Rastelemente 12, 13 gelöst ist und die Stellscheibe 7 in dieser Position frei drehbar gegenüber der Grundscheibe 6 angeordnet ist.

Durch Aufbringen einer drehenden Kraft auf den Stellzapfen 17 kann nun die Stellscheibe 7 verdreht werden. In Fig. 3c ist eine Stellung dargestellt, in welcher der Stellzapfen 17 um etwa 80° nach links gedreht wurde, wonach nun das Rastelement 12 mit der nächsten Rastausnehmung 13 in Fluchtung gebracht wurde. Dies entspricht dem auf der Skala 14 mit "2" bezeichneten Durchflussquerschnitt Q. Anschließend wird über den Stellzapfen 17 erneut eine Axialkraft in umgekehrter Richtung auf die Stellscheibe 7 aufgebracht und diese an der Grundscheibe 6 erneut verrastet.

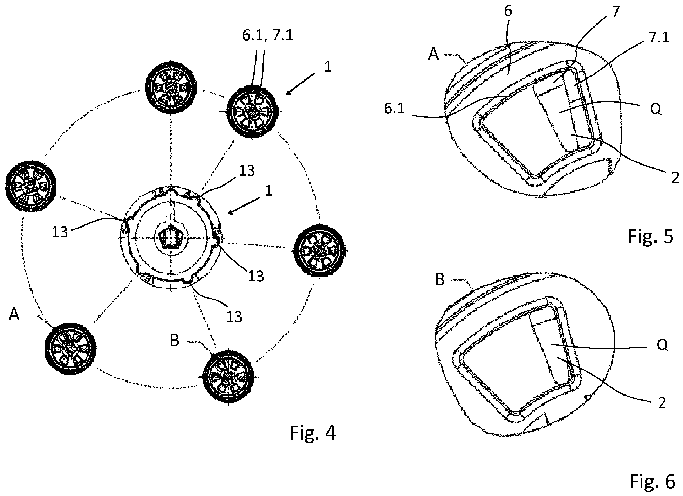

Die verschiedenen Einstellmöglichkeiten sind in Fig. 4 schematisch dargestellt, welche in deren Zentrum eine Draufsicht auf den Mengenregler 1 zeigt, wobei den jeweiligen Rastelementen 13 des Grundkörpers 6 zu Veranschaulichungszwecken eine den Blick auf die im Inneren angeordneten Ausnehmungen 6.1, 7.1 freigebende Ansicht des Mengenreglers 1 zugeordnet ist.

Dies soll nachfolgend anhand der vergrößerten Detailansichten der Fig. 5 und 6 noch näher erläutert werden.

Fig. 5 zeigt eine vergrößerte Ansicht der beiden Ausnehmungen 6.1, 7.1 der Stellscheibe 6 bzw. der Grundscheibe 7. Diese Drehstellung entspricht dem Durchflussquerschnittswert "1,5" auf der Skala 14. In dieser Drehstellung ergibt sich eine Überdeckung der beiden Ausnehmungen 6.1, 7.1, die gemäß dem rechten Bereich der Figur 5 einen Durchfluss 2 mit einem Durchfluss Q entspricht. Fig. 6 zeigt eine entsprechende Ansicht bei einem Wert "1" auf der Skala 14. Der Durchflussquerschnitt Q wurde daher durch weiteres Drehen der Stellscheibe 7 gegenüber der Darstellung in Fig. 5 noch etwas reduziert.

Mit dem vorstehend beschriebenen Mengenregler 1 wird eine einfache Möglichkeit geschaffen, entsprechend der jeweiligen Vorgaben eines Ventils 20 die Durchflussmenge des Mengenreglers 1 zu variieren, ohne dass hierzu eine Vielzahl unterschiedlicher Mengenregler 1 bevorratet werden müsste.

### Bezugszeichen:

- 1: Mengenregler
- 2: Durchfluss
- 3: Drossel
- 4: Einstellmechanik
- 5: Lochscheibenpaar
- 6: Grundscheibe
- 6.1: Ausnehmung
- 6.2: Lageröffnung
- 7: Stellscheibe
- 7.1: Ausnehmung
- 8: Anschlag
- 9: Anschlag
- 10: Lagerzapfen
- 10.1: Zunge
- 11: Einpressbereich
- 12: Rastelement, Rastausnehmung
- 13: Rastelement, Rastnase
- 14: Skala
- 15: Rippe
- 16: Rippe
- 17: Stellzapfen
- 20: Ventil
- 21: Ventileinlass
- 22: Anschlag
- Q: Querschnitt

## Patentansprüche

1. Mengenregler insbesondere für ein Ventil (20) mit einem von einem Medium durchströmbaren Durchfluss (2) und einer im Anströmbereich des Durchflusses (2) angeordneten Drossel (3), über welche die in den Durchfluss (2) strömende Fluidmenge druckabhängig regelbar ist, **dadurch gekennzeichnet,**
**dass** der Durchflussquerschnitt (Q) des Durchflusses (2) über eine Einstellmechanik (4) einstellbar ausgebildet ist.

2. Mengenregler nach Anspruch 1, **dadurch gekennzeichnet, dass** die Einstellmechanik (4) ein Lochscheibenpaar (5) aufweist, welches eine feststehende Grundscheibe (6) und eine gegenüber der Grundscheibe (6) drehbar angeordnete Stellscheibe (7) aufweist.

3. Mengenregler nach Anspruch 2, **dadurch gekennzeichnet, dass** die Stellscheibe (7) einen Stellzapfen (17) zum manuellen Bewegen der Stellscheibe (7) gegenüber der Grundscheibe (6) aufweist.

4. Mengenregler nach einem der vorhergehenden Ansprüche, **dadurch gekennzeichnet, dass** die Stellscheibe (7) axial bewegbar gegenüber der Grundscheibe (6) angeordnet ist.

5. Mengenregler nach Anspruch 3, **dadurch gekennzeichnet, dass** die Axialbewegungen der Stellscheibe (7) über Anschläge (8, 9) begrenzt sind.

6. Mengenregler nach einem der vorhergehenden Ansprüche, **dadurch gekennzeichnet, dass** ein Lagerzapfen (10) mehrere Federzungen (10.1) aufweist.

7. Mengenregler nach einem der Ansprüche 2 bis 6, **dadurch gekennzeichnet, dass** die Grundscheibe (6) umfangsseitig einen Einpressbereich (11) zur Einpressung des Mengenregler (1) in den Einlass des Ventils (20) aufweist.

8. Mengenregler nach einem der Ansprüche 2 bis 7, **dadurch gekennzeichnet, dass** die Grundscheibe (6) und die Stellscheibe (7) in verschiedenen Drehstellungen gegeneinander festlegbar sind.

9. Mengenregler nach Anspruch 8, **dadurch gekennzeichnet, dass** die Grundscheibe (6) und die Stellscheibe (7) über mehrere Rastelemente (12, 13) gegeneinander festlegbar sind.

10. Mengenregler nach Anspruch 9, **dadurch gekennzeichnet, dass** mehrere, insbesondere sechs, Rastelemente (12) an der Grundscheibe (6) und ein Rastelement (13) an der Stellscheibe (7) angeordnet ist.

11. Mengenregler nach Anspruch 10, **dadurch gekennzeichnet, dass** die an der Grundscheibe (6) angeordneten Rastelemente (12) als Rastausnehmungen und die an der Stellscheibe (7) angeordneten Rastelemente (13) als Rastnasen ausgebildet sind.

12. Mengenregler nach einem der vorhergehenden Ansprüche, **dadurch gekennzeichnet, dass** die Drossel (3) als verformbare Drosselscheibe ausgebildet ist.

13. Mengenregler nach Anspruch 12, **dadurch gekennzeichnet, dass** eine Seite der Drossel (3) konisch ausgebildet und/oder die andere Seite der Drossel (3) mit Rippen versehen ist.

14. Mengenregler nach einem der vorhergehenden Ansprüche, **dadurch gekennzeichnet, dass** dieser als Einpresseinheit zur Pressmontage innerhalb des Einlasses des Ventils (20) ausgebildet ist.

15. Ventil mit einem Ventileinlass (21) und einem Ventilauslass, **dadurch gekennzeichnet, dass** innerhalb des Ventileinlasses (21) ein Mengenregler (1) nach einem der vorhergehenden Ansprüche angeordnet ist.
